# EUROPÄISCHE PATENTSCHRIFT

(11) **EP 1 560 538 B1**
(45) Veröffentlichungstag und Bekanntmachung des Hinweises auf die Patenterteilung: **15.08.2018**
(21) Anmeldenummer: 03811360.1
(22) Anmeldetag: 03.11.2003
(51) Int. Cl.: A61C 17/34, A61C 17/32, A46B 9/04

(54) **ELEKTRISCHE ZAHNBÜRSTE UND ZAHNBÜRSTENKOPF HIERFÜR**
ELECTRIC TOOTHBRUSH AND CORRESPONDING TOOTHBRUSH HEAD
BROSSE A DENTS ELECTRIQUE ET TETE DE BROSSE A DENTS CORRESPONDANTE

(30) Priorität: 16.11.2002 DE 10253532
(43) Veröffentlichungstag der Anmeldung: 10.08.2005
(73) Patentinhaber: Braun GmbH, 61476 Kronberg (DE)
(72) Erfinder: KRESSNER, Gerhard, 63674 Altenstadt (DE)
(74) Vertreter: Schneider, Stefan Michael
(86) Internationale Anmeldenummer: PCT/EP2003/012213
(87) Internationale Veröffentlichungsnummer: WO 2004/045448

(56) Entgegenhaltungen:
- EP-A- 1 093 770
- US-A- 5 504 959
- US-A- 5 524 312

## Beschreibung

Die vorliegende Erfindung betrifft einen Zahnbürstenkopf einer elektrischen Zahnbürste, die ein Handteil mit einem Antrieb aufweist, mit einem Bürstenkopfträger, der mit dem Handteil verbindbar ist, sowie mehreren Borstenträgern, die jeweils ein Borstenfeld tragen, beweglich an dem Bürstenkopfträger gelagert sind und von dem Antrieb oszillierend antreibbar sind, wobei die Borstenträger jeweils mittels einer Antriebskupplung an einen Übertrager des Antriebs ankuppelbar sind. Die Erfindung betrifft ferner eine Zahnbürste mit einem solchen Zahnbürstenkopf.

Aus der US 5,524,312 ist eine elektrische Zahnbürste bekannt, an deren Bürstenkopf zwei separate Borstenträger vorgesehen sind, die von einer gemeinsamen Antriebswelle angetrieben werden. Der eine Borstenträger führt eine oszillierende Drehbewegung um eine zum Bürstenstiel senkrechte Achse aus. Der andere Borstenträger wird um eine zum Bürstenstiel parallele Achse hin- und hergeschwenkt. Diese Borstenträgeranordnung bewirkt zwar eine aktive Relativbewegung zwischen den Borstenbüscheln, ist jedoch insoweit nachteilig, als sie auf einen speziellen Antriebsmechanismus beschränkt ist. Der weiter hinten zum Handteil hin angeordnete Zusatzborstenträger benötigt eine zylindrische Unterseite mit einer speziellen, gekrümmten Kurvennut, in der ein Eingriffsvorsprung der in Längsrichtung oszillierenden Antriebsachse eingreift. Zum anderen ist die Konfiguration der auf den beiden Borstenträgern angeordneten Borstenbüschel wenig geeignet, um Zahnzwischenräume effektiv zu reinigen.

Aus der US 5,504,959, worauf die zweiteilige Form des Anspruchs 1 basiert, ist eine elektrische Zahbürste bekannt, bei der zwei scheibenförmige Borstenträger in Zahnbürstenlängsrichtung hintereinander angeordnet sind und jeder der Borstenträger ist mittig um eine Drehachse drehbar gelagert und rotierend oszillierend antreibbar.

Der vorliegenden Erfindung liegt daher die Aufgabe zugrunde, einen verbesserten Zahnbürstenkopf sowie eine entsprechende verbesserte Zahnbürste zu schaffen, die die Nachteile des Standes der Technik vermeiden und letzteren in vorteilhafter Weise weiterbilden. Vorzugsweise soll mit einem einfachen, effektiven Antrieb der beiden Borstenträger eine verbesserte Reinigung der Zähne erreicht werden.

Diese Aufgabe wird erfindungsgemäß durch einen Zahnbürstenkopf gemäß Patentanspruch 1 sowie eine Zahnbürste gemäß Patentanspruch 18 gelöst. Bevorzugte Ausgestaltungen der Erfindung sind Gegenstand der abhängigen Ansprüche.

Erfindungsgemäß besitzen die Borstenträger also jeweils Antriebskupplungsmittel, mit denen sie an ein oder mehrere exzentrische Mitnehmerstücke des um eine Längsachse rotatorisch antreibbaren Übertragers des Antriebs ankuppelbar sind. Durch die Anordnung zweier separat gelagerter Borstenträger, die von einem gemeinsamen Antriebsübertrager um verschiedene Bewegungsachsen angetrieben werden, kann in einfacher Weise eine bessere Putzwirkung erzielt werden. Die Relativbewegung der auf den Borstenträgern gelagerten Borstenfeldern unterstützt die Putzbewegung, so dass die Reinigungswirkung nicht nur durch die Bewegung des Putzers erfolgt.

Die exzentrischen Mitnehmerstücke des Übertragers zum Antreiben der Borstenträger können verschieden ausgebildet sein. Nach einer Ausführung der Erfindung können die Borstenträger an einen gemeinsamen, eine zur Rotationsachse des Übertragers zylindrische oder kegelförmige Umlaufbahn beschreibenden Mitnehmerstift, der vorzugsweise dem Handteil der Zahnbürste zugeordnet ist, angekuppelt werden. Alternativ könnte auch für jeden Borstenträger ein eigener Mitnehmerstift an dem Übertrager vorgesehen sein, von denen einer eine kegelförmige und einer eine zylindrische Umlaufbahn beschreiben kann. Vorzugsweise ist jedoch nur ein gemeinsamer Mitnehmerstift für beide Borstenträger vorgesehen, der bevorzugterweise eine zylindrische Antriebsbewegung beschreibt.

Vorzugsweise ist der Mitnehmerstift oszillierend angetrieben, so dass er nur eine Teilumlaufbahn beschreibt, die zylindersegment- oder auch kegelsegmentförmig sein kann. Hierdurch kann einfach eine entsprechende oszillierende Bewegung der beiden Borstenträger erzielt werden. Der Mitnehmerstift könnte jedoch auch nach Art einer Kurbel eine durchgehende, vollständige Umlaufbewegung beschreiben, die dennoch wie bei einem Kurbeltrieb eine oszillierende Bewegung der Borstenträger bewirkt. Vorzugsweise jedoch oszilliert der Übertrager mit seinen exzentrischen Mitnehmerstücken in einem Winkelsegment von ± 90° oder weniger.

In Weiterbildung der Erfindung ist der Übertrager fest dem Zahnbürstenkopf zugeordnet und drehbar um seine Längsachse im Inneren des Bürstenkopfträgers an letzterem gelagert. Um den Zahnbürstenkopf vom Handteil der Zahnbürste abnehmen zu können, kann der Übertrager an seinem dem Handteil zugewandten Ende einen Kupplungsabschnitt, der eine lösbare Drehkupplung zum drehfesten Ankuppeln an ein handteilseitiges Antriebselement bildet, besitzen. Der Bürstenkopfträger, der ein Bürstenrohr bildet, besitzt an seinem den Borstenträgern abgewandten Ende lösbare Befestigungsmittel zu seiner Befestigung am Handteil der Zahnbürste. Beim Aufsetzen des Bürstenkopfträgers auf das Handteil der Zahnbürste werden gleichzeitig der im Bürstenkopfträger vorgesehene Antriebsübertrager und das handteilseitige Antriebselement miteinander gekuppelt.

Die Borstenträger sind gemäß der Erfindung allesamt jeweils um eine Bewegungsachse quer zur Zahnbürstenlängsrichtung an dem Bürstenkopfträger beweglich gelagert, wobei jeder Borstenträger seine eigene Bewegungsachse besitzt, die voneinander beabstandet sind. Der Zahnbürstenkopf zeichnet sich also dadurch aus, dass zwei um separate Querachsen beweglich gelagerte Borstenträger von einem gemeinsamen Antriebsübertragerelement angetrieben werden. Unabhängig von der konkreten Ausbildung des Antriebsübertragerelements besitzt eine solche Zahnbürstenkopfkonfiguration besondere Vorteile hinsichtlich einer effektiven Zahnreinigung.

Es sind zwei Borstenträger vorgesehen. Ein Hauptborstenträger, der an dem von dem Handteil der Zahnbürste entfernten Ende des Bürstenkopfträgers angeordnet sein kann, ist vorzugsweise um eine Drehachse, die im wesentlichen senkrecht zur Zahnbürstenlängsrichtung sowie im wesentlichen parallel zur Hauptrichtung der auf dem Hauptborstenträger vorgesehenen Borsten angeordnet ist, drehbar gelagert und von dem exzentrischen Mitnehmer der Antriebsachse oszillierend antreibbar. Der Hauptborstenträger kann im wesentlichen plattenförmig ausgebildet sein und eine kreisförmige Kontur besitzen. Vorzugsweise ist er um seine Symmetrieachse rotatorisch oszillierend antreibbar. Der rotatorisch oszillierenden Antriebsbewegung kann gegebenenfalls eine Stocherbewegung entlang der Drehachse des Hauptborstenträgers überlagert sein, um eine gründlichere Reinigung der Zahnzwischenräume zu erreichen. Hierzu kann der Hauptborstenträger in Richtung seiner Drehachse verschieblich am Bürstenkopfträger gelagert sein.

Neben dem Hauptborstenträger ist ein Zusatzborstenträger vorgesehen, der in unmittelbarer Nachbarschaft hinter dem Hauptborstenträger, also näher zu dem Handteil der Zahnbürste hin, angeordnet ist. Gemäß der Erfindung ist der Zusatzborstenträger um eine im wesentlichen senkrecht zur Zahnbürstenlängsrichtung angeordnete Schwenkachse schwenkbar gelagert und von dem Antriebsübertrager, der auch den Hauptborstenträger antreibt, oszillierend antreibbar.

Gemäß der Erfindung ist die Schwenkachse bezogen auf den Zusatzborstenträger bzw. das darauf angeordnete Borstenfeld außermittig angeordnet, um an einem der Schwenkachse gegenüberliegenden Abschnitt des Borstenträgers eine größere Bewegung zu erreichen. Die Schwenkachse des Zusatzborstenträgers kann etwa parallel zur Hauptrichtung der Borsten und damit parallel zur Drehachse des Hauptborstenträgers angeordnet sein. Wird die Achse in Längsrichtung der Zahnbürste an einem Randabschnitt des Zusatzborstenträgers angeordnet, vollführt der gegenüberliegendende Randabschnitt des Zusatzborstenträgers eine quer hin- und hergehende Bewegung. Grundsätzlich wäre es auch möglich, die Schwenkachse bezüglich des Zusatzborstenträgers mittig anzuordnen, so dass sich dieser ähnlich dem Hauptborstenträger in sich verdreht. Bevorzugt ist jedoch die zuvor beschriebene Anordnung der Schwenkachse insbesondere an dem dem Hauptborstenträger zugewandten Ende des Zusatzborstenträgers, so dass sich die näher am Handteil liegenden Borsten, die auf dem Zusatzborstenträger befestigt sind, seitlich quer hin- und herbewegen und die Zahnzwischenräume auswischen können.

In alternativer Weiterbildung der Erfindung kann die Schwenkachse des Borstenträgers im wesentlichen in der von dem Zusatzborstenträger definierten Ebene liegen und sich senkrecht zur Längsrichtung der Zahnbürste erstrecken. Der Zusatzborstenträger führt dementsprechend eine auf- und niedergehende Wippbewegung aus, so dass seine Borstenbüschel stochernd auf- und abgehen. Diese Wippachse des Zusatzborstenträgers kann sich bezogen auf die Längserstreckung des Zusatzborstenträgers in Längsrichtung der Zahnbürste etwa mittig erstrecken, so dass das hintere Ende und das vordere Ende des Zusatzborstenträgers gegenläufig auf- und abwippen. In alternativer Ausführung der Erfindung kann die Wippachse des Zusatzborstenträgers auch zu einem Ende des Zusatzborstenträgers hin verschoben sein. Insbesondere kann der Zusatzborstenträger um sein dem Handteil zugewandtes Ende wippbar an dem Bürstenkopfträger gelagert sein, so dass die an den Hauptborstenträger angrenzenden Borstenbüschel, die auf dem Zusatzborstenträger befestigt sind, eine auf- und abgehende Stocherbewegung ausführen. Hierdurch können die Zahnzwischenräume, die an von dem Borstenfeld des Hauptborstenträgers bearbeitete Zahnflanken angrenzen, besonders wirkungsvoll gereinigt werden.

Gemäß einer nicht erfindungsgemäßen Ausführung kann vorgesehen sein, dass der Zusatzborstenträger entlang einer Bewegungsachse an dem Bürstenkopfträger translatorisch verschieblich gelagert ist. Vorzugweise besitzt die entsprechende Schiebeführung des Zusatzborstenträgers einen Freiheitsgrad quer zur Längsrichtung der Zahnbürste.

Um mit den auf dem Zusatzborstenträger angeordneten Borsten eine Stocherbewegung in Längsrichtung der Borsten ausführen zu können, könnte die translatorische Bewegungsachse des Zusatzborstenträgers im wesentlichen senkrecht zu der von dem Zusatzborstenträger definierten Ebene, d.h. im wesentlichen parallel zu der von den Borsten definierten Hauptborstenrichtung liegen. Alternativ hierzu kann die Bewegungsachse quer zur Zahnbürstenlängsrichtung in der von dem Zusatzborstenträger definierten Ebene liegen, so dass der Zusatzborstenträger quer hin- und herbewegt werden kann. Hierdurch können die auf dem Zusatzborstenträger angeordneten Borsten in Richtung der Zahnzwischenräume bewegt werden und diese entsprechend auswischen.

Die Antriebskupplungen zwischen den beiden Borstenträgern und dem exzentrischen Mitnehmer der Antriebsachse sind vorzugsweise als Gelenkverbindung ausgebildet, die jeweils eine Gelenkachse quer zur Zahnbürstenlängsrichtung besitzen. Insofern als die Borstenträger an ihren Ankupplungspunkten zu dem seine räumliche Ausrichtung behaltenden Mitnehmerstift nicht translatorisch hin- und hergeht, sondern eine Schwenkbewegung ausführt, kann durch die gelenkige Verbindung zwischen den Borstenträgern und dem exzentrischen Mitnehmer der entsprechende Winkelversatz ausgeglichen werden.

In Weiterbildung der Erfindung besitzen die gelenkigen Verbindungen zwischen dem Antriebsübertragerelement und den Borstenträgern neben ihrer Gelenkigkeit zumindest einen weiteren Freiheitsgrad. Dabei kann zum einen die Antriebskupplung eines Borstenträgers, insbesondere des Hilfsborstenträgers, derart ausgebildet sein, dass ausschließlich Kräfte und Bewegungen quer zur Zahnbürstenlängsrichtung übertragen werden. In Längsrichtung der Zahnbürste werden keine Kräfte übertragen. Vorteilhafterweise ermöglicht dies einen Ausgleich der zwischen dem Mitnehmerstift und dem Borstenträger entstehenden Relativbewegung in Längsrichtung der Zahnbürste.

Um die zylinder- bzw. kegelförmige Antriebsbewegung des Mitnehmerstifts nur teilweise auf die Borstenträger weiterzugeben, kann die gelenkige Verbindung zwischen dem Mitnehmerstift und den Borstenträgern auch einen Freiheitsgrad quer zur Zahnbürstenlängsrichtung aufweisen. Insbesondere kann die Verbindung zwischen dem exzentrischen Mitnehmer und dem Zusatzborstenträger und/oder dem Hauptborstenträger in einer Richtung quer zu der Bewegungsebene, in der sich der jeweilige Borstenträger bewegen soll, freigängig ausgebildet sein. Der sich auf einer zylindrischen bzw. kegelförmigen Bahn bewegenden Mitnehmerstift überträgt dementsprechend nur eine Komponente seiner oszillierend umlaufenden Bewegung auf den jeweiligen Borstenträger. Soll beispielsweise der Zusatzborstenträger um eine Achse senkrecht zum Zusatzborstenträger, d.h. parallel zu den Borsten verschwenkt werden, kann der exzentrische Mitnehmer in einem Längsschlitz parallel zur Borstenrichtung in dem Zusatzborstenträger sitzen. Die Bewegungskomponente quer zur Borstenlängsrichtung wird auf den Borstenträger übertragen, während die Bewegungskomponente des Mitnehmerstifts parallel zur Borstenlängsrichtung nicht übertragen wird. Soll hingegen der Zusatzborstenträger auf- und abgewippt werden, so kann der Mitnehmerstift in einem Querschlitz parallel zur Borstenträgerebene sitzen, so dass der entsprechende Abschnitt auf- und abbewegt wird, die quer hin- und hergehende Bewegung jedoch nicht übertragen wird.

Der Mitnehmerstift muss jedoch nicht in einer schlitzförmigen Ausnehmung in dem Zusatzborstenträger sitzen. Der Zusatzborstenträger kann alternativ als Antriebskupplung eine Gleitfläche aufweisen, die sich quer zur Längsrichtung der Zahnbürste erstreckt und auf der der Mitnehmerstift abgleitet. Vorzugsweise kann dabei eine Vorspanneinrichtung beispielsweise in Form einer Feder vorgesehen sein, die den Zusatzborstenträger mit seiner Gleitfläche auf den Mitnehmer drückt und mit diesem in Eingriff hält. Gegebenenfalls kann auf eine solche Vorspannung auch verzichtet werden, da zum Beispiel dann, wenn der Zusatzborstenträger mit einer Stocherbewegung auf- und abgewippt werden soll, der Zusatzborstenträger von den Zahnputz-Reaktionskräften automatisch auf den Mitnehmer gedrückt wird.

Die Amplitude des Hubs des Borstenträgers kann dabei über die Form der Gleitfläche beeinflußt werden. In einfacher Weiterbildung der Erfindung kann die Eingriffs-Gleitfläche des Zusatzborstenträgers im wesentlichen eben ausgebildet sein. Die Antriebsbewegung des exzentrischen Mitnehmers besitzt zwei zueinander senkrechte Komponenten, so dass der Mitnehmer einerseits auf der Gleitfläche hin- und herrutscht und dabei gleichzeitig senkrecht gegen die Gleitfläche drückt und den Borstenträger entsprechend bewegt. Der Hub des Borstenträgers entspricht dabei der Bewegungskomponente des Mitnehmers senkrecht zur Gleitfläche.

Ist hingegen eine größere - oder auch kleinere - Hubbewegung des Borstenträgers erwünscht, kann die Gleitfläche eine nockenförmige Wölbung quer zur Längsachse des Übertragers besitzen. Fährt der exzentrische Mitnehmer über die Gleitfläche hin und her, erzeugt die nockenförmige Wölbung dabei die gewünschte zusätzliche Bewegung senkrecht zu dem Hin- und Herfahren.

Die Antriebskupplungmittel eines der Borstenträger, insbesondere des Hauptborstenträgers, sind in Weiterbildung der Erfindung kraftübertragend sowohl in Zahnbürstenlängsrichtung als auch quer zur Zahnbürstenlängsrichtung, wobei das entsprechende Mitnehmerstück am Übertrager in Zahnbürstenlängsrichtung verschieblich gelagert, vorzugsweise elastisch vorgespannt ist. Insbesondere können der Mitnehmerstift und der Hauptborstenträger gegeneinander und/oder gegen den rohrförmigen Bürstenkopfträger verspannt sein. Hierdurch wird vorteilhafterweise erreicht, dass trotz der Gelenkigkeit und trotz der Freiheitsgrade der Antriebskupplung keine freien Bewegungen und keine Klappergeräusche entstehen können. Der Antrieb läuft leise.

In Weiterbildung der Erfindung besitzt der Übertrager, der als Kunstoffspritzgußteil ausgebildet sein kann, eine exzentrische Lagerbohrung, in der der Mitnehmerstift, der vorzugsweise als Metallstift ausgebildet ist, längsverschieblich und um seine Längsachse drehbar aufgenommen ist. Zur Vorspannung des Mitnehmerstifts gegen den Borstenträger kann eine Feder auf dem Mitnehmerstift sitzen und sich gegenüber dem Übertrager abstützen.

Um die angetriebene Bewegung der beiden Borstenträger bzw. der darauf angeordneten Borstenfelder besser nutzen und die Zahnreinigung noch effektiver zu machen, können an dem Hauptborstenträger und/oder an dem Zusatzborstenträger mehrere Gruppen von Borstenbüscheln befestigt sein, die in verschiedene Richtungen geneigt angeordnet sind. Dabei können die in verschiedene Richtungen geneigten Gruppen von Borstenbüschel verschiedene Querschnitte besitzen und/oder mit unterschiedlichen Eigenschaften wie unterschiedlicher Steifigkeit, Borstenlänge, Borstenhöhe und dgl. ausgebildet sein. Vorzugsweise sind die auf dem Hauptborstenträger angeordneten Borstenbüschel in andere Richtungen geneigt als die Borstenbüschel auf dem Zusatzborstenträger. Nach einer Ausführung der Erfindung können auf jedem Borstenträger unterschiedlich geneigte Borstenbüschel vorgesehen sein.

Es hat sich dabei als zweckmäßig erwiesen, nicht nur Borstenbüschel mit kreisrundem Querschnitt, sondern auch Borstenbüschel mit einem von der Kreisform abweichenden Querschnitt, insbesondere mit länglichem, ovalem bzw. rechteckigem Querschnitt vorzusehen.

Um besser in Zahnzwischenräume eindringen zu können, können an dem Hauptborstenträger und/oder an dem Zusatzborstenträger Borstenbüschel vorgesehen sein, deren freie Arbeitsenden in verschiedenen Höhen über den Borstenträgern liegen.

Weitere Vorteile, Anwendungsmöglichkeiten und vorteilhafte Merkmale der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. In der Zeichnung zeigt:
- Figur 1: eine Draufsicht auf den wechselbaren Zahnbürstenkopf einer elektrischen Zahnbürste gemäß einer ersten bevorzugten Ausführung der Erfindung, die zwei beweglich gelagerte Borstenträger zeigt, die beide jeweils um eine zur Borstenhauptrichtung parallele Schwenkachse schwenkbar gelagert und antreibbar sind,
- Figur 2: einen vertikalen Längsschnitt entlang der Linie B-B des Zahnbürstenkopf aus Figur 1, der die Lagerung des Antriebsübertragers zeigt, der die beiden Borstenträger antreibt,
- Figur 3: einen horizontalen Längsschnitt entlang der Linie D-D des Zahnbürstenkopfs aus Figur 2, der den Antriebsmechanismus und insbesondere die Ankupplung der beiden Borstenträgers an einen exzentrischen Mitnehmerstift des Antriebsübertragers zeigt,
- Figur 4: einen Längsschnitt des Antriebsübertragers mit dem daran gelagerten exzentrischen Mitnehmerstift aus den vorhergehenden Figuren,
- Figur 5: eine ausschnittsweise, perspektivische Ansicht eines Zahnbürstenkopfs mit zwei beweglich gelagerten Borstenträgern gemäß einer weiteren Ausführung der Erfindung, wonach der hintere Zusatzborstenträger um eine Querachse an seinem hinteren Endabschnitt auf- und abwippbar gelagert und antreibbar ist,
- Figur 6: eine ausschnittsweise, perspektivische Ansicht des Zahnbürstenkopfs aus Figur 5 in einer anderen Blickrichtung, die den Antriebsmechanismus für die beiden Borstenträger und insbesondere die Ankupplung des hinteren Zusatzborstenträgers an eine Mitnehmer zeigt,
- Figur 7: eine ausschnittsweise, perspektivische Ansicht eines Zahnbürstenkopfs mit zwei beweglich gelagerten Borstenträgern nach einer alternativen Ausführung der Erfindung, wonach der hintere Zusatzborstenträger um eine Querachse wippbar etwa mittig gelagert ist,
- Figur 8: eine ausschnittsweise, perspektivische Ansicht des Zahnbürstenkopfs aus Figur 7 in einer anderen Blickrichtung, die den Antriebsmechanismus für die beiden Borstenträger und insbesondere die Ankupplung des hinteren Zusatzborstenträgers an die Mitnehmer des Antriebs zeigt,
- Figur 9: eine ausschnittsweise, perspektivische Ansicht eines Zahnbürstenkopfs mit zwei beweglich gelagerten Borstenträgern nach einer alternativen Ausführung der Erfindung, wonach der hintere Zusatzborstenträger um eine translatorische Bewegungsachse im wesentlichen parallel zur Borstenhauptrichtung aufund abfahrbar gelagert ist,
- Figur 10: eine ausschnittsweise, perspektivische Ansicht des Zahnbürstenkopfs aus Figur 9 in einer anderen Blickrichtung, die den Antriebsmechanismus für die beiden Borstenträger und insbesondere die Ankupplung des hinteren Zusatzborstenträgers an die Mitnehmer des Antriebs zeigt,
- Figur 11: eine ausschnittsweise, perspektivische Ansicht eines Zahnbürstenkopfs mit zwei beweglich gelagerten Borstenträgern nach einer weiteren Ausführung der Erfindung, wonach der hintere Zusatzborstenträger um eine translatorische Bewegungsachse quer zur Zahnbürstenlängsrichtung und quer zur Borstenhauptrichtung hin- und herfahrbar gelagert ist,
- Figur 12: eine ausschnittsweise, perspektivische Ansicht des Zahnbürstenkopfs aus Figur 11, die den Antriebsmechanismus für die beiden Borstenträger und insbesondere die Ankupplung des hinteren Zusatzborstenträgers an die Mitnehmer zeigt, und
- Figur 13: eine perspektivische Ansicht eines Zahnbürstenkopfs der Zahnbürste aus Figur 1, die die Anordnung der Borstenbüschel auf den beiden Borstenträgern zeigt.

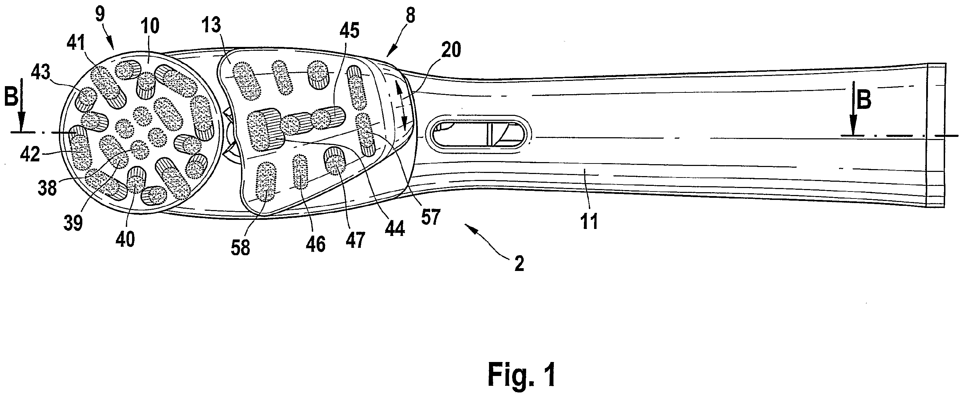

Der in Figur 1 gezeigte Zahnbürstenkopf 2 umfaßt ein Bürstenrohr 11, das einen Bürstenkopfträger bildet und mit einem stirnseitigen Ende auf ein nicht näher gezeigtes Handteil einer elektrischen Zahnbürste aufsetzbar ist. Der Handteil besitzt in an sich bekannter Weise ein Zahnbürstengehäuse, in dem axial hintereinander ein Batterieaufnahmefach und ein Antriebsmotor angeordnet sind.

Der Bürstenkopf 2 besitzt zwei Borstenfelder, nämlich ein unmittelbar am Kopfende liegendes Hauptborstenfeld 9 sowie ein hinteres Zusatzborstenfeld 8, das in unmittelbarer Nachbarschaft des Hauptborsenfeldes 9 auf dessen dem Handteil zugewandten Seite liegt.

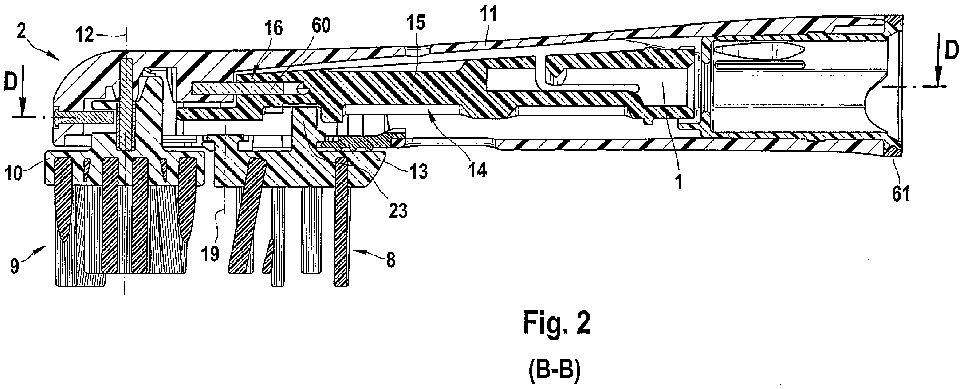

Wie Figur 2 zeigt, wird das am Kopfende liegende Borstenfeld 9 von einem Hauptborstenträger 10 getragen, der zum Borstenfeld hin etwa kreisplattenförmig ausgebildet ist und an einem Kopfabschnitt des Bürstenkopfträgers 11 befestigt ist. Wie Figuren 1 und 2 zeigen, sitzt der Borstenträger 10 drehbar auf einer im Bürstenkopfträger 11 verankerten Drehachse 12, die sich senkrecht zur Zahnbürstenlängsachse etwa parallel zu der Hauptborstenrichtung des Borstenfeldes 9 erstreckt. Die Drehachse 12 bildet die Symmetrieachse des plattenförmigen Borstenträgers 10.

Der Borstenträger 10 wird vom Motor her mittels eines Übertrages 14 in Form einer Antriebswelle 15 rotatorisch oszillierend um die Drehachse 12 angetrieben. Die Antriebswelle 15 ist ein Kunstoffspritzgußteil und wird im Bürstenrohr 11 in einem Lager 16 gelagert, das von einem Metallstift gebildet sein kann, der in Zahnbürstenlängsrichtung einerseits in einem Lagerabschnitt des Bürstenkopfträgers 11 und andererseits stirnseitig in der Antriebswelle 15 sitzt. Das Lager 16 erlaubt eine Rotation der Antriebswelle 15 um ihre zur Zahnbürstenlängsrichtung parallele Längsachse. Angetrieben wird die Antriebswelle 15 von einem rotatorisch oszillierenden Antriebselement, das getrieblich mit der Motorwelle verbunden ist, die sich in Längsrichtung der Zahnbürste erstreckt. Die Antriebswelle 15 führt dabei eine oszillierende Drehbewegung aus. Die Antriebswelle besitzt an ihrem handteilseitigen Ende einen Kupplungsabschnitt 1, mit dem sie drehfest auf ein Antriebselement am Handteil aufgesteckt werden kann.

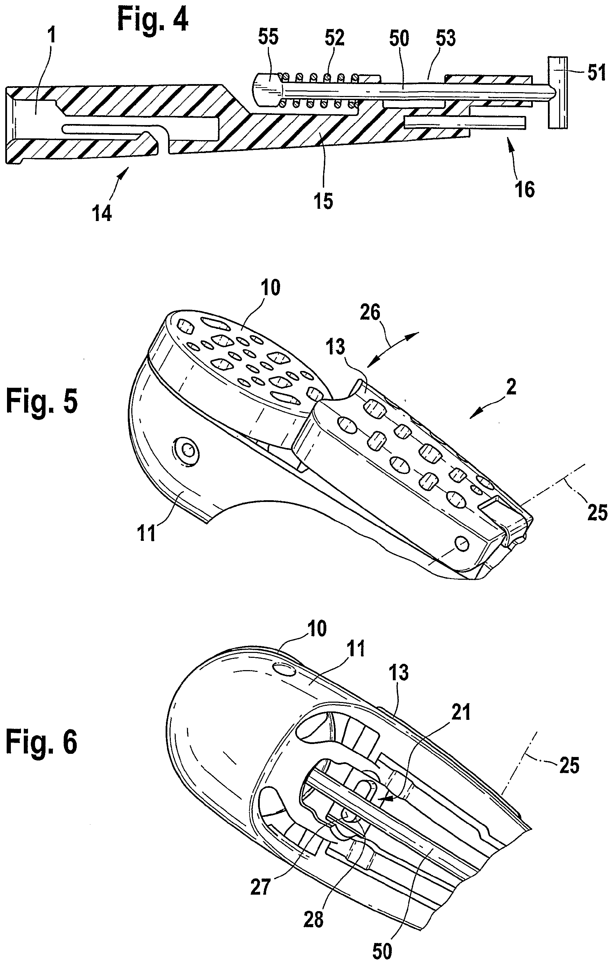

Wie Fig. 4 zeigt, ist in der Antriebswelle 15 mit Abstand zu ihrer Längsachse eine dazu etwa parallele Durchgangsbohrung vogesehen, in der ein Mitnehmerstift 50 drehbar und längsverschieblich aufgenommen ist. An seinem vorderen Ende trägt der Mitnehmerstift 50 einen stiftförmigen Aufnehmer 51, der sich im etwa rechten Winkel zum Mitnehmerstift 50 erstreckt und mit diesem starr verbunden, bspw. verschweißt sein kann.

Der Mitnehmer 50 führt eine rotatorische Umlaufbewegung auf einer zylindersegmentförmigen Bahn um die Längs- und Drehachse der Antriebswelle 15 aus, wobei die Symmetrieebene der oszillierenden Schwenkbewegung, aus der der Mitnehmer nach rechts und links ausgelenkt wird, die Längssymmetrieebene des Zahnbürstenkopfs 2 bildet.

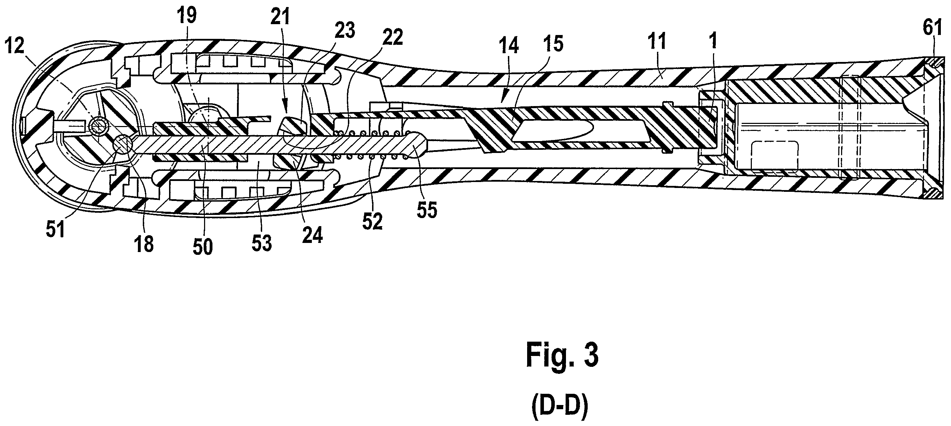

Das dem Borstenträger 10 zugewandte Ende des Mitnehmerstifts 50 bzw. der daran befestigte Aufnehmer 51 sitzt in einer sacklochförmigen Ausnehmung 18 in dem Borstenträger 10, die in einem dem Handteil 1 zugewandten Segment des Borstenträgers 10 ausgebildet ist und sich im wesentlichen parallel zur Drehachse 12 erstreckt (vgl. Figur 3). Durch die sacklochförmige Ausnehmung wird nur die Komponente der Antriebsbewegung des Mitnehmers 50 quer zur Drehachse 12 auf den Borstenträger 10 übertragen. Die Auf- und Abbewegung, d.h. die Komponente der umlaufenden Antriebsbewegung parallel zur Drehachse 12 wird nicht übertragen, da der Aufnehmer 51 in der Ausnehmung 18 parallel zur Drehachse 12 freigängig, also längsverschieblich ist. Ferner bildet die Aufnahme des Aufnehmers 51 in der Ausnehmung 18 ein Drehgelenk, um den oszillierenden Winkelversatz zwischen dem Borstenträger 10 und dem Mitnehmer 50 auszugleichen.

Wie Figur 4 zeigt, ragt das dem Aufnehmer 51 abgewandte Ende des Mitnehmerstifts 50 aus der Durchgangsbohrung in der Antriebswelle 15 heraus und steht ein Stück weit über einen Rand der Antriebswelle 15 über. Auf den Mitnehmerstift 50 ist im Bereich des überstehenden Stücks eine Schraubendruckfeder 52 aufgesteckt. Das freie Ende des Mitnehmerstifts 50 ist zusammengedrückt und abgeflacht und bildet eine radiale Verbreiterung 55. Die Schraubenfeder 52 liegt somit an der Verbreiterung an und wird von dieser gehalten. Ferner stützt sich die Schraubendruckfeder 52 mit ihrem anderen Ende an dem Rand der Antriebswelle 15 ab. Die Schraubendruckfeder 52 spannt hierdurch den Mitnehmerstift 50 achsial gegenüber dem Borstenträger 10 vor, um Klappergeräusche im Betrieb zu vermeiden. Insofern als der Aufnehmer 51 in der sacklochförmigen Ausnehmung 18 im Borstenträger 10 sitzt, führt der Aufnehmer 51 eine oszillierende Kreisbahnbewegung um die Drehachse 12 des Borstenträgers 10 aus. Der Mitnehmerstift 50 wird dementsprechend achsial oszillierend in der Durchgangsausnehmung in der Antriebswelle 15 verschoben, wobei die Schraubendruckfeder 52 abwechselnd zusammengedrückt wird und sich wieder verlängert.

Wie Figur 1 und 2 zeigt, wird das hintere, näher beim Handteil 1 liegende Borstenfeld 8 von einem etwa plattenförmigen Zusatzborstenträger 13 getragen, der wie der Hauptborstenträger 10 unabhängig vom Antriebsübertrager 15 beweglich an dem Bürstenkopfträger 11 gelagert ist. Wie Figur 2 zeigt, ist der Zusatzborstenträger 13 an seinem vorderen, dem Hauptborstenträger 10 zugewandten Randabschnitt um eine Schwenkachse 19 schwenkbar gelagert, die sich im wesentlichen senkrecht zur Längsrichtung der Zahnbürste und senkrecht zu der von dem Zusatzborstenträger 13 definierten Ebene erstreckt. Dementsprechend kann der Zusatzborstenträger 13, insbesondere sein dem Hauptborstenträger 10 abgewandter Abschnitt, seitlich quer hin- und herschwenken, wie dies der Pfeil 20 verdeutlicht. Es versteht sich, daß der Borstenträger 13 nicht nur in der vorerwähnten Ebene verschwenkbar sein kann, sondern daß der Borstenträger 13 auf einem Kreisbogen verschwenkt werden kann, der kongruent zum Kreisbogen des exzentrischen Mitnehmerstifts 50 angeordnet ist. Insoweit ist lediglich ein zusätzlicher Bewegungsfreiheitsgrad des Borstenträgers 13 bezüglich der Schwenkachse 19 vorzusehen.

Um das Zusatzborstenfeld 8 um die Schwenkachse 19 herum rotatorisch oszillierend anzutreiben, ist der Zusatzborstenträger 13 mit dem exzentrischen Mitnehmer 50 gekoppelt, der auch den Hauptborstenträger 10 antreibt. Wie Figur 2 und Figur 3 zeigt, ist auf der Unterseite des Zusatzborstenträgers 13 eine Antriebskupplung 21 vorgesehen, die aus einer zur Schwenkachse 19 parallelen Längsausnehmung 22 besteht, in der der Mitnehmerstift 50 geführt ist. Die Antriebswelle 15 besitzt hierzu im Bereich der Durchgangsausnehmung eine Aussparung 53, so dass der Mitnehmerstift 50 frei liegt (vgl. Figur 4) und die Durchgangsbohrung, in der der Mitnehmerstift 50 aufgenommen ist, von zwei fluchtenden Durchgangsbohrungsabschnitten gebildet ist. Die Längsausnehmung 22 wird in der gezeichneten Ausführung von zwei pfostenförmigen Vorsprüngen 23 und 24 definiert, zwischen denen der Mitnehmer 50 geführt ist. Die Vorsprünge 23, 24 erstrecken sich im wesentlichen parallel zur Schwenkachse 19, so dass die zwischen den Vorsprüngen 23 und 24 definierte Ausnehmung bzw. der Spalt ebenfalls parallel zur Schwenkachse 19 verläuft. Dementsprechend wird hier nur eine Komponente der umlaufenden Antriebsbewegung des Mitnehmers 50 übertragen, nämlich in der zur Zahnbürstenlängsrichtung parallelen Ebene senkrecht zur Schwenkachse 19. Die vertikale Komponente der Antriebsbewegung parallel zur Symmetrieebene der Zahnbürste wird nicht übertragen, da der Mitnehmer 50 in dieser Richtung in der Längsausnehmung 22 zwischen den Vorsprüngen 23 und 24 frei hin- und hergehen kann. Auch in der Längsrichtung des stiftförmigen Mitnehmers 50 kann dieser frei zwischen den Vorsprüngen 23 und 24 hin- und hergehen, um die von dem Aufnehmer 51 induzierte Längsbewegung des Mitnehmers 50 zu erlauben. Schließlich bildet die Verbindung zwischen den Vorsprüngen 23 und 24 und dem Mitnehmer 50 ein Gelenk, das ein Verschwenken des Mitnehmers 50 relativ zu dem Zusatzborstenträger 13 um eine zur Schwenkachse 19 parallele Achse erlaubt, um den oszillierenden Winkelversatz zwischen dem Borstenträger 13 und dem Mitnehmer 50 auszugleichen. Die Innenseiten der Vorsprünge 23 und 24 können hierzu abgerundet sein. Der rohrförmige Bürstenkopfträger 11 besitzt unter dem Zusatzbürstenträger 13 eine Durchgangsausnehmung, durch die hindurch sich die Vorsprünge 23 und 24 des Zusatzborstenträgers 13 erstrecken.

Alternative Lagerungen des Zusatzborstenfeldes 8 bzw. des Zusatzborstenträgers 13 zeigen die Figuren 5 bis 12. Die darin gezeigten Zahnbürstenköpfe sind ebenfalls für die in Figur 1 gezeigte Zahnbürste vorgesehen und entsprechen im übrigen dem zuvor beschriebenen Zahnbürstenkopf einschließlich der Ausbildung des Antriebsübertragers 14 und dessen Mitnehmer 50, so dass insoweit auf dessen Beschreibung Bezug genommen wird und dieselben Bezugsziffern für entsprechende Bauteile verwendet sind. In den Figuren ist dabei der Einfachheit halber von dem Antriebsübertrager nur dessen stiftförmiger Mitnehmer 50 gezeigt.

Gemäß Figur 5 ist der Zusatzborstenträger 13 an dem Bürstenkopfträger 11 um eine Schwenkachse 25 schwenkbar gelagert, die sich im wesentlichen parallel zu der von dem Zusatzborstenträger 13 definierten Ebene erstreckt und quer zur Zahnbürstenlängsrichtung verläuft. Der Zusatzborstenträger 13 ist dabei mit seinem hinteren, d.h. dem Handteil 1 zugewandten Endabschnitt bzw. Rand schwenkbar gelagert, so dass er um die Schwenkachse 25 herum eine auf- und abgehende Wippbewegung ausführen kann. Der dem Hauptborstenträger 10 zugewandte Abschnitt des Zusatzborstenträgers 13 kann gemäß dem Pfeil 26 auf- und abwippen, so dass die Borsten des Zusatzborstenfeldes 8 eine Stocherbewegung ausführen.

Um den Zusatzborstenträger 13 um die Schwenkachse 25 herum oszillierend anzutreiben, ist an seiner Unterseite als Antriebskupplung eine Eingriffs- bzw. Gleitfläche 27 vorgesehen, mit der er auf der Mitnehmer 15 sitzt, die auch den Hauptborstenträger 10 antreibt. Wie Figur 6 zeigt, wird die Eingriffs- bzw. Gleitfläche 27 von der stirnseitigen Oberfläche eines länglichen, sich quer zur Zahnbürstenlängsrichtung erstreckenden Stößels bzw. Höckers 28 gebildet, der zum Mitnehmer 50 hin vorspringt. Die Oberfläche des Stößels 28 kann im wesentlichen eben ausgebildet sein. Der oszillierend umlaufende Mitnehmer 50 fährt in Querrichtung über die Gleitfläche 27, wobei die vertikale Komponente der umlaufenden Kurbelbewegung auf den Stößel bzw. Höcker 28 übertragen wird und den Zusatzborstenträger 13 auf- und abwippt, wobei die Gleitfläche 27 mit dem Mitnehmer 50 von den Zahnputz-Reaktionskräften, die auf das Zusatzborstenfeld wirken, in Eingriff gehalten wird. Gegebenenfalls kann hier auch eine Vorspannung des Zusatzborstenträgers beispielsweise mittels einer Feder vorgesehen sein, die den Zusatzborstenträger gegen den Mitnehmer 50 drückt. Alternativ könnte auch vorgesehen sein, dass anstelle der Gleitfläche 27 eine nutförmige Querausnehmung in einem entsprechendem Abschnitt des Zusatzborstenträgers 13 vorgesehen ist, in der der Mitnehmer 50 sitzt, so dass der Zusatzborstenträger von dem Mitnehmer nach oben gedrückt und aktiv nach unten gezogen werden würde. Eine solche Quernut entspricht der Anordnung zweier paralleler Gleitflächen 27, zwischen denen der Mitnehmer 50 geführt ist.

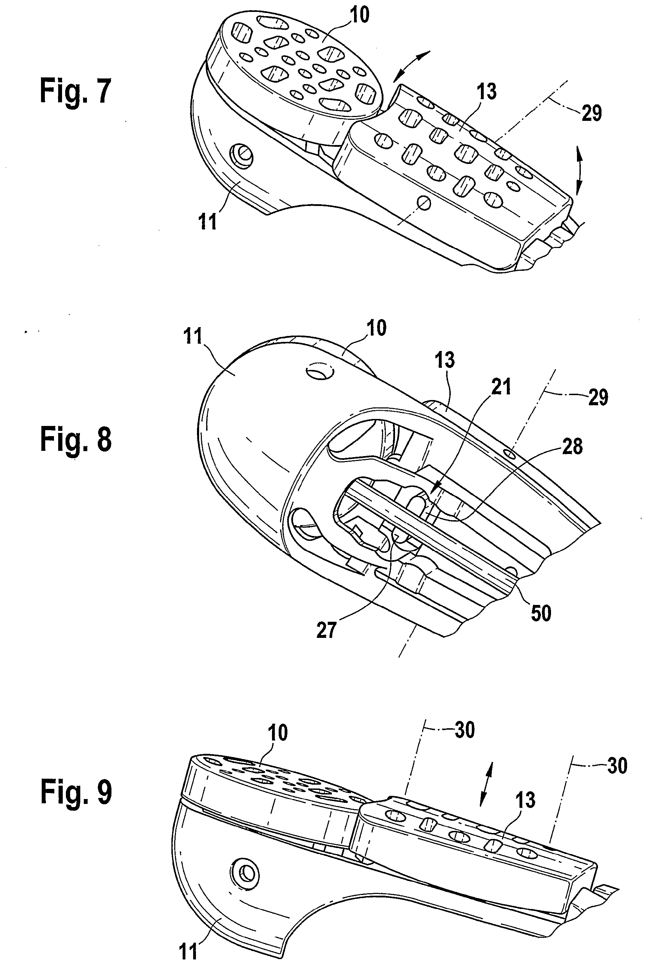

Gemäß den Figuren 7 und 8 kann der Zusatzborstenträger 13 auch etwa mittig um eine quer verlaufende Schwenkachse 29 nach Art einer Wippe gelagert sein. Die Schwenkachse 29 erstreckt sich wie in der zuvor beschriebenen Ausführung quer zur Zahnbürstenlängsrichtung etwa in der von dem Zusatzborstenträger 13 definierten Ebene bzw. einer dazu parallelen Ebene, so dass ein dem Hauptborstenträger 10 zugewandter Abschnitt des Zusatzborstenträgers 13 und ein gegenüberliegender, dem Handteil 1 zugewandter Abschnitt des Zusatzborstenträgers 13 gegenläufig auf- und abgehende Wippbewegungen ausführen. Die Antriebskupplung des Zusatzborstenträgers kann identisch der zuvor beschriebenen Ausführung nach den Figuren 5 und 6 durch eine auf einem Stößel 28 vorgesehene Gleitfläche 27 gebildet sein, die auf dem Mitnehmer 50 abgleitet. Insofern als bei dieser Ausführung die Zahnputz-Reaktionskräfte beidseitig der Schwenkachse 29 wirken, kann eine Vorspanneinrichtung zweckmäßig sein, die den Zusatzborstenträger mit dem Mitnehmer 50 in Eingriff hält. Gegebenenfalls kann hier auch die zuvor beschriebene Zwangsführung mittels einer Quernut vorgesehen sein, in der die Mitnehmer sitzt.

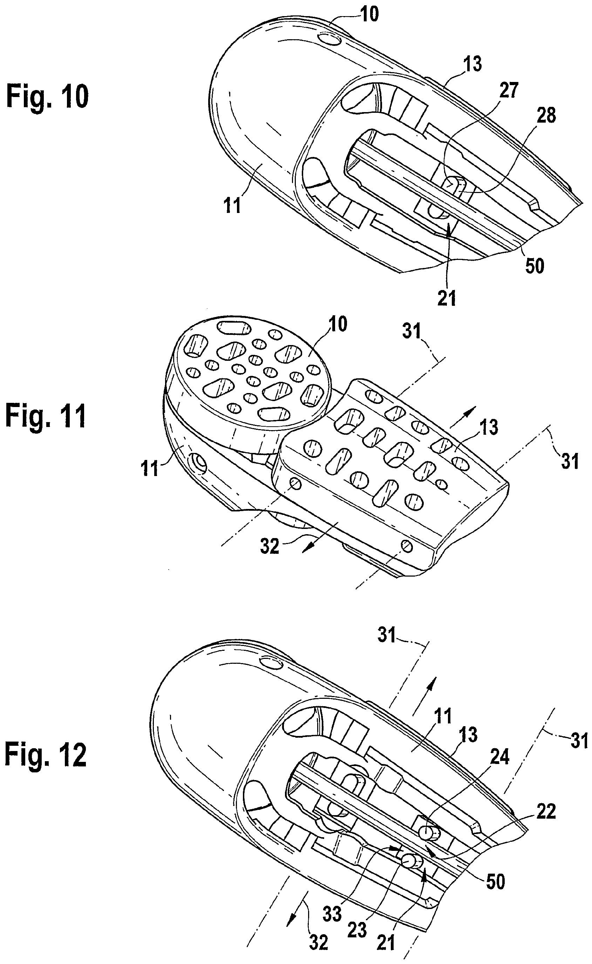

Gemäß Figur 9 und 10 kann der Zusatzborstenträger 13 auch translatorisch verschieblich an dem Bürstenkopfträger 11 geführt sein. Wie Figur 9 zeigt, kann der Zusatzborstenträger 13 entlang zweier Bewegungsachsen 30, die sich im wesentlichen senkrecht zur von dem Zusatzborstenträger definierten Ebene erstrecken, geführt sein. Die Schiebführung kann beispielsweise durch eine an sich bekannte zylindrische Bolzenführung ausgebildet sein. Die Schiebeführungsachsen 30 können auf der Längsmittelebene der Zahnbürste in einem hinteren und vorderen Randabschnitt des Zusatzborstenträgers 13 angeordnet sein, wie dies Figur 9 zeigt. Entsprechend der translatorischen Beweglichkeit des Zusatzborstenträgers 13 kann dieser auf- und abgehende Hubbewegungen ausführen, so dass das Zusatzborstenfeld 8 auf dem Zusatzborstenträger 13 Stocherbewegungen ausführt.

Die Hubbewegung des Zusatzborstenträgers 13 wird auch hier durch eine Ankupplung an den exzentrischen Mitnehmer 50 erzeugt. Wie Figur 10 zeigt, kann auf einer Unterseite des Zusatzborstenträgers 13 eine sich quer zur Zahnbürstenlängsrichtung erstreckende Gleitfläche 27 vorgesehen sein, die von der Oberfläche eines zum Mitnehmer 50 vorspringenden I Stößels 28 gebildet ist. Zweckmäßigerweise ist der Stößel 28 etwa mittig bzw. zentrisch unter dem Zusatzborstenfeld sowie mittig zwischen den Bewegungsachsen 30 angeordnet, so dass eine gleichmäßige Kraftverteilung und verkantungsfreie Bewegung erzeugt werden kann. Die Zahnputz-Reaktionskräfte, die auf das Zusatzborstenfeld 8 wirken, halten die Gleitfläche 27 mit dem Mitnehmer 50 in Eingriff.

Eine weitere mögliche Lagerung des Zusatzborstenträgers 13 zeigen die Figuren 11 und 12. Der Zusatzborstenträger 13 ist auch hier translatorisch verschieblich an dem Bürstenkopfträger 11 gelagert, und zwar entlang zweier paralleler Schiebeführungsachsen 31, die sich in der von dem Zusatzborstenträger 13 definierten Ebene quer zur Zahnbürstenlängsrichtung erstrecken. Wie Figur 11 zeigt, können ein hinterer, dem Handteil 1 zugewandter Endabschnitt und ein dem Hauptborstenträger 10 zugewandter Endabschnitt des Zusatzborstenträgers 13 durch die genannte Schiebeführung gelagert sein. Der Zusatzborstenträger 13 kann in diesem Fall seitlich quer hin- und hergehende Bewegungen ausführen, wie dies der Pfeil 32 verdeutlicht.

Die translatorisch oszillierende Antriebsbewegung des Zusatzborstenträgers 13 wird auch in diesem Fall von dem Mitnehmer 50 bewirkt. Wie Figur 12 zeigt, sitzt der Zusatzborstenträger 13 mittels einer Querführung 33 auf der Mitnehmer 15. Die Querführung 33 wird ähnlich der Ausführung der Figuren 2 und 3 von zwei parallelen pfostenförmigen Vorsprüngen 23 und 24 definiert, die zwischen sich einen Spalt bzw. eine Längsausnehmung 22 definieren, die sich im wesentlichen senkrecht zur Ebene des Zusatzborstenträgers 13 erstreckt. Der Mitnehmer 50 kann zwischen den beiden Vorsprüngen 23 und 24 vertikal, d.h. in der Längssymmetrieebene der Zahnbürste freigängig auf- und abgleiten. In einer Ebene senkrecht hierzu, d.h. in einer Ebene parallel zu den beiden Schiebeführungsachsen 31 wird die Antriebsbewegung des Mitnehmers 50 jedoch übertragen, so dass der Zusatzborstenträger 13 in Richtung der Schiebeführungsachsen 31 oszillierend hin- und hergeht.

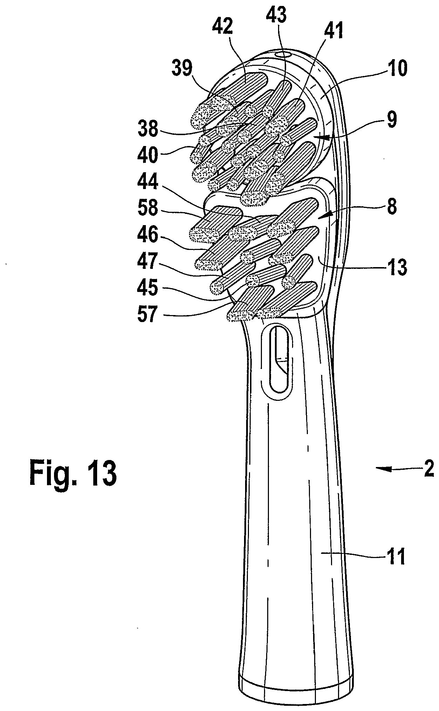

Eine bevorzugte Beborstung der beiden Borstenträger 10 und 13 zeigt Figur 13. Es versteht sich, daß die Beborstung gemäß Figur 13 bei jeder der vorstehend beschriebenen Ausführungsformen des Zusatzborstenträgers bzw. dessen Lagerung vorgesehen sein kann.

Das rotatorisch oszillierend antreibbare Hauptborstenfeld 9 besitzt einen insgesamt etwa kreiszylindrischen Umriss und wird von einer Mehrzahl von Borstenbüscheln verschiedener Neigung, verschiedener Höhe und verschiedenen Querschnitts gebildet.

Wie Figur 13 zeigt, sind zentrale erste Borstenbüschel 38 mittig um die Drehachse des Hauptborstenträgers herum angeordnet. Sie erstrecken sich senkrecht zu der von dem Borstenträger 10 definierten Ebene und besitzen einen etwa kreisrunden bzw. leicht ovalen Querschnitt. Von den ersten Borstenbüscheln 38 sind vier an der Zahl vorgesehen. Sie liegen mittig um die Drehachse 19 herum. Benachbart zu dem ersten Borstenbüschel 38 sind zweite Borstenbüschel 39, die bei unverdrehter Anordnung des Borstenträgers 10 auf der Längsmittelachse der Zahnbürste liegen und in Längsrichtung vor bzw. hinter dem ersten Borstenbüschel 38 liegen. Wie Figur 13 zeigt, besitzen die zweiten Borstenbüschel 39 einen ovalen Querschnitt mit einer sich quer zur Längsachse der Zahnbürste erstreckenden Längsachse. Die zweiten Borstenbüschel 39 sind ebenfalls senkrecht zu der von dem Borstenträger 10 definierten Ebene angeordnet. Ihr Abstand von der Drehachse 19 ist größer als der der ersten Borstenbüschel 38. Das Verhältnis von Konturlänge zu Konturbreite beträgt etwa zwei.

Die weiteren Borstenbüschel des angetriebenen Borstenfeldes sind geneigt angeordnet, und zwar in unterschiedlicher Ausrichtung. Die vierten Borstenbüschel 40, die radial ausserhalb der ersten Borstenbüschel 38 sozusagen auf einem zweiten Borstenbüschelring angeordnet sind, besitzen einen etwa kreisförmigen Querschnitt und sind radial nach außen geneigt, d.h. ihre freien Arbeitsenden sind von der Drehachse des Borstenträgers weiter entfernt als ihre am Borstenträger 10 befestigten Befestigungsabschnitte. Der Neigungswinkel ist spitz und beträgt weniger als 20°.

Die dritten Borstenbüschel 41 sind ebenfalls radial nach außen geneigt angeordnet. Sie haben jedoch eine ovale Kontur bzw. einen länglichen Querschnitt, wobei die Längsachse des Querschnitts radial ausgerichtet ist. Der Querschnitt der dritten Borstenbüschel ist etwa zweimal bis dreimal so lang wie breit. Die dritten Borstenbüschel 41 sitzen radial außerhalb der ersten Borstenbüschel 38 benachbart zu diesen auf einer quer zur Zahnbürstenlängsrichtung verlaufenden Symmetrieachse des Borstenfeldes.

Die übrigen Borstenbüschel des Borstenfeldes 9 sind ebenfalls geneigt angeordnet, jedoch sind sie in Umfangsrichtung um die Drehachse 12 herum geneigt. Sie bilden den äußeren Rand bzw. Kranz des Borstenfeldes 9.

Die fünften Borstenbüschel 42 besitzen eine ovale Kontur bzw. einen länglichen Querschnitt, der etwa tangential zum Rand des Borstenträgers 10 ausgerichtet ist. Im Querschnitt sind die Borstenbüschel 42 etwa doppelt bis dreimal so lang wie breit. Wie Figur 1 zeigt, sind die fünften Borstenbüschel 42 paarweise im Bereich der Längsachse der Zahnbürste angeordnet, wenn das Borstenfeld 9 unverdreht ist. Sie sind paarweise gegeneinander geneigt, so dass ihre freien Arbeitsenden näher zusammen stehen als ihre im Borstenträger 10 verankerten Befestigungsabschnitte.

Schließlich sind sechste Borstenbüschel 43 vorgesehen, die ebenfalls am äußeren Rand des Borstenfeldes liegen und in Umfangsrichtung um die Drehachse 12 geneigt sind. Sie besitzen jedoch einen etwa kreisförmigen Querschnitt und sind paarweise auf beiden Seiten der dritten Borstenbüschel 41 angeordnet und ebenfalls gegensinnig auf diese zugeneigt. Die Neigungswinkel der in Umfangsrichtung geneigten, außen liegenden Borstenbüschel 43 und 42 sind ebenfalls spitz und betragen vorzugsweise weniger als 20° zur Senkrechten durch die vom Borstenträger 10 definierten Ebene.

Wie Figuren 2 und 13 zeigen, besitzen die auf dem bewegbaren Borstenträger 10 angeordneten Borstenbüschel zwei Längen. Die in Längsrichtung ganz vorne und hinten liegenden, außen angeordneten fünften Borstenbüschel 42, deren freie Enden alle in einer Ebene liegen, sind länger als die restlichen Borstenbüschel. Die freien Enden der fünften Borstenbüschel 42 definieren eine Ebene. Der Höhenunterschied zwischen den Borstenbüscheln beträgt im Bereich von 0,5 mm bis 2,5 mm, vorzugsweise etwa 1,0 mm bis 1,5 mm.

Die Borstenbüschel des Zusatzborstenfeldes 8 besitzen ebenfalls unterschiedliche Querschnitte hinsichtlich Kontur und Fläche und sind darüber hinaus ebenfalls unterschiedlich geneigt angeordnet. Es sind auch Borstenbüschel unterschiedlicher Länge vorgesehen, wie noch beschrieben wird.

Wie Figur 1 zeigt, sind im Zusatzborstenfeld 8 grob gesprochen drei Reihen von Borstenbüschein vorgesehen, die sich alle etwa in Längsrichtung der Zahnbürste erstrecken. Die mittlere Reihe liegt auf der Längsmittelachse des Zusatzborstenträgers 13, während die beiden äußeren Reihen quer hierzu beabstandet sind.

In der mittleren Borstenreihe sind alle Borstenbüschel zum Hauptborstenfeld hin geneigt angeordnet. Die Borstenbüschel besitzen unterschiedliche Querschnittsflächen. Ein erstes Borstenbüschel 44 des festen Borstenfeldes 8 besitzt einen ovalen Querschnitt, dessen Längsachse ca. doppelt so lang ist wie seine Querachse, und sitzt in der mittleren Reihe näher am Hauptborstenfeld 9 als nachfolgend als vierte Borstenbüschel bezeichnete Borstenbüscheln 45, die ebenfalls zum Handteil hin nach hinten geneigt sind. Die vierten Borstenbüschel 45 besitzen einen runden oder ggf. leicht ovalen Querschnitt, sind jedoch wesentlich schlanker ausgebildet und besitzen eine kleinere Querschnittsfläche als die ersten Borstenbüschel 44.

Die beiden äußeren Reihen der Borstenbüschel des festen Borstenfeldes 8, die zum Handteil hin leicht zusammenlaufen, wie Figur 1 zeigt, bestehen aus zweiten, dritten, fünften und sechsten Borstenbüscheln. Zweite Borstenbüschel 46 besitzen einen ovalen Querschnitt mit relativ schlanker Kontur. Die Längsachse der länglichen Querschnittskontur beträgt etwa das dreifache der Breite der Querschnittskontur. Die dritten Borstenbüschel 47 besitzen einen etwa kreisrunden Querschnitt, wobei der Durchmesser des Querschnitts etwa die Hälfte der Längsachse des Querschnitts der zweiten Borstenbüschel 46 beträgt. Die dritten Borstenbüschel sind nach außen von der Längsmittelebene weg geneigt. Fünfte Borstenbüschel 57 sind am nächsten zum Handteil hin angeordnet und haben einen etwa den zweiten Borstenbüscheln 46 entsprechenden Querschnitt, sie sind jedoch nach innen zur Längsmittelebene hin geneigt (vgl. Fig. 1). Die übrigen Borstenbüschel der äußeren Reihen sind hingegen nicht geneigt. Die sechsten Borstenbüschel 58 sind die dicksten Borstenbüschel und in den äußeren Reihen am nächsten zum Hauptborstenfeld 9 hin angeordnet. Sie besitzen einen länglichen Querschnitt mit einer Längsachse quer bis leicht schräg zur Längsmittelebene.

Wie Figur 1 zeigt, sind die Borstenbüschel der äußeren beiden Reihen von der Längsmittelachse des Bürstenkopfs 2 unterschiedlich beabstandet. Der Abstand zur Längsmittelachse nimmt zum Handteil 1 hin ab. Die Borstenbüschel 47 sind jedoch noch soweit in Reihe hintereinander, dass ihre Kontur zumindest teilweise etwa hinter der Kontur der in Reihe jeweils nächsten Borstenbüschel liegt.

Die Borstenbüschel des Zusatzborstenfeldes 8 definieren zwei Arbeitsebenen, wie Figur 2 zeigt. Die kreisrunden dritten Borstenbüschel 47 und die ovalen, dicken sechsten Borstenbüschel 58 in den äußeren Reihen sowie die dickeren ersten Borstenbüschel 44 und die runden Borstenbüschel 45 in der mittleren Reihe sind kürzer ausgebildet und definieren mit ihren freien Arbeitsenden eine tiefere Ebene, die mit der Ebene übereinstimmt, die von den ersten, zweiten, dritten und vierten sowie sechsten Borstenbüscheln des Hauptborstenfeldes 9 definiert wird. Eine höhere, zweite Ebene wird hingegen von den längeren schlanken ovalen Borstenbüscheln 46 und 57 in den beiden äußeren Reihen definiert. Diese höhere Ebene stimmt mit der Ebene überein, die von den längeren fünften Borstenbüscheln des Hauptborstenfeldes 9 definiert wird. Im Zusatzborstenfeld 8 gilt damit, dass die schlankeren ovalen Borstenbüschel eine größere Länge besitzen als die dickeren Borstenbüschel.

Im Gegensatz zum Hauptborstenfeld 9 besitzt das Zusatzborstenfeld 8 keine kreisrunde Kontur, sondern eine insgesamt langgestreckte Kontur, die an ihrem dem rotierenden Borstenfeld 9 zugewandten Ende dieses umgibt.

## Patentansprüche

1. Zahnbürstenkopf einer elektrischen Zahnbürste, die ein Handteil mit einem Antrieb aufweist, mit einem Bürstenkopfträger (11), der mit dem Handteil verbindbar ist, sowie mehreren Borstenträgern (10, 13), die jeweils ein Borstenfeld (9, 8) tragen, beweglich an dem Bürstenkopfträger (11) gelagert sind und von dem Antrieb oszillierend antreibbar sind, wobei die Borstenträger (10, 13) mittels einer Antriebskupplung (18, 50, 51; 21) an einen Übertrager (14) des Antriebs ankuppelbar sind, **dadurch gekennzeichnet, dass** die Borstenträger (10, 13) jeweils Antriebskupplungsmittel (18, 51; 21) besitzen, mit denen sie an ein oder mehrere exzentrische Mitnehmerstücke (50) des um eine Längsachse (60) rotatorisch antreibbaren Übertragers (14) des Antriebs ankuppelbar sind, wobei ein Hauptborstenträger (10) an dem vom Handteil entfernten Ende des Bürstenkopfträgers (11) um eine im wesentlichen senkrecht zur Zahnbürstenlängsrichtung und/oder im wesentlichen parallel zu einer Hauptborstenrichtung des auf dem Hauptborstenträger angeordneten Borstenfelds (9) angeordnete Drehachse (12) drehbar gelagert und oszillierend antreibbar ist und wobei ein Zusatzborstenträger (13), ein am nächsten zum Handteil angeordneter Borstenträger, um eine im wesentlichen senkrecht zur Zahnbürstenlängsrichtung angeordnete Schwenkachse (19, 25, 29) schwenkbar gelagert und oszillierend antreibbar ist, wobei die Schwenkachse bezogen auf den Zusatzborstenträger bzw. das darauf angeordnete Borstenfeld außermittig angeordnet ist.

2. Zahnbürstenkopf nach dem vorhergehenden Anspruch, wobei die Antriebskupplungsmittel (18, 50, 51; 21) der Borstenträger (10, 13) derart ausgebildet sind, dass sie an einen gemeinsamen, eine zur Rotationsachse des Übertragers zylindrische oder kegelförmige Umlaufbahn beschreibenden Mitnehmerstift (51) ankuppelbar sind.

3. Zahnbürstenkopf nach Anspruch 1, wobei die Antriebskupplungsmittel (18, 50, 51; 21) der Borstenträger (10, 13) derart ausgebildet sind, dass sie an einen gemeinsamen Mitnehmerstift (51), der oszillierend auf einer zur Rotationsachse des Übertragers zylindersegment- oder kegelsegmentförmigen Teilumlaufbahn antreibbar ist, ankuppelbar sind.

4. Zahnbürstenkopf nach einem der vorhergehenden Ansprüche, wobei der Übertrager (14) um seine eigenen Längsachse im Inneren des Bürstenkopfträgers (11) an diesem drehbar gelagert ist und an seinem dem Handteil zugewandten Ende einen Kupplungsabschnitt (1) zum drehfesten Ankuppeln an ein handteilseitiges Antriebselement aufweist.

5. Zahnbürstenkopf nach einem der vorhergehenden Ansprüche, wobei die Borstenträger (10, 13) jeweils eine Bewegungsachse (12; 19, 25, 29, 30, 31) quer zur Zahnbürstenlängsrichtung besitzen.

6. Zahnbürstenkopf nach Anspruch 1, wobei die Schwenkachse (19) des Zusatzborstenträgers (13) etwa parallel zur Hauptborstenrichtung des auf dem Zusatzborstenträgers (13) angeordneten Zusatzborstenfeldes (8) und/oder etwa senkrecht zur von dem Zusatzborstenträger (13) definierten Ebene angeordnet ist.

7. Zahnbürstenkopf nach Anspruch 1, wobei die Schwenkachse (25, 29) des Zusatzborstenträgers (13) etwa parallel zu einer von dem Zusatzborstenträger (13) definierten Ebene angeordnet ist.

8. Zahnbürstenkopf nach einem der vorhergehenden Ansprüche, wobei der Zusatzborstenträger (13) als Antriebskupplung (21) eine Gelenkverbindung aufweist, die um eine Gelenkachse quer zur Zahnbürstenlängsrichtung gelenkig ausgebildet ist.

9. Zahnbürstenkopf nach einem der vorhergehenden Ansprüche, wobei die Antriebskupplung zwischen dem Zusatzborstenträger (13) und dem Mitnehmerstück (50) des Übertragers (14) einen translatorischen Freiheitsgrad aufweist, insbesondere eine translatorische Beweglichkeit in einer Richtung quer zur Rotationsachse des Übertragers zulässt, wobei vorzugsweise das Mitnehmerstück (50) in einer längsschlitzförmigen Ausnehmung (22) im Zusatzborstenträger (13) geführt ist.

10. Zahnbürstenkopf nach einem der vorhergehenden Ansprüche, wobei der Zusatzborstenträger (13) als Antriebskupplung (21) eine Gleitfläche (27) aufweist, die sich quer zur Längsrichtung der Zahnbürste erstreckt und auf der das Mitnehmerstück (50) abgleiten kann, wobei vorzugsweise eine Vorspanneinrichtung vorgesehen ist, die die Gleitfläche (27) mit dem Mitnehmerstück (50) in Eingriff hält.

11. Zahnbürstenkopf nach einem der vorhergehenden Ansprüche, wobei die Antriebskupplungsmittel (21) zumindest eines der Borstenträger () derart ausgebildet sind, dass ausschließlich Kräfte und Bewegungen quer zur Zahnbürstenlängsrichtung übertragen werden, wobei vorzugsweise die Antriebskupplungen (18, 51; 21) in einer die Längsrichtung enthaltenden Ebene freigängig und in einer hierzu senkrechten Ebene kraftübertragend ausgebildet sind.

12. Zahnbürstenkopf nach einem der vorhergehenden Ansprüche, wobei die Antriebskupplungsmittel (18, 51) zumindest eines der Borstenträger (10) derart ausgebildet sind, dass Kräfte und Bewegungen quer zur Zahnbürstenlängsrichtung und Kräfte in Zahnbürstenlängsrichtung übertragen werden, wobei das entsprechende Mitnehmerstück (50) am Übertrager (14) in Zahnbürstenlängsrichtung verschieblich gelagert, vorzugsweise elastisch vorgespannt ist.

13. Zahnbürstenkopf nach einem der vorhergehenden Ansprüche, wobei die Antriebskupplungen (18; 23, 24) unmittelbar und/oder starr an den Borstenträgern (10, 13) vorgesehen und ohne zwischengeschaltete Teile wie Pleuelstangen und dergleichen unmittelbar mit dem jeweiligen am Übertrager (14) befestigten Mitnehmerstück (50) in formschlüssigen Eingriff stehen.

14. Zahnbürstenkopf nach einem der vorhergehenden Ansprüche, wobei der Übertrager eine exzentrische Lagerbohrung aufweist, vorzugsweise als Kunstoffspritzgußteil ausgebildet ist, und der Mitnehmer (50) von einem Stift, insbesondere Metallstift (50), gebildet ist, der in der Lagerbohrung längsverschieblich und um seine Längsachse drehbar aufgenommen ist.

15. Zahnbürstenkopf nach einem der vorhergehenden Ansprüche, wobei Vorspannmittel (52), insbesondere eine Federvorrichtung (52) zur Vorspannung des Übertragers bzw. des daran befestigten Mitnehmers (50) gegen zumindest einen der Borstenträger (10) vorgesehen sind.

16. Zahnbürstenkopf nach einem der vorhergehenden Ansprüche, wobei er lösbare Befestigungsmittel (61) zur Befestigung am Handteil aufweist und der Bürstenkopfträger (11) zusammen mit den Borstenträgern (10, 13) vom Handteil abnehmbar bzw. darauf aufsetzbar ist, wobei der Übertrager (14) eine lösbare Drehkupplung (1) aufweist, die beim Aufstecken des Zahnbürstenkopfs auf den Handteil auf ein handteilseitiges Antriebselement auffädelt bzw. damit in Eingriff gelangt.

17. Zahnbürstenkopf nach einem der vorhergehenden Ansprüche, wobei an zumindest einem der Borstenträger (10, 13) unterschiedlich geneigte, im Querschnitt unterschiedliche, unterschiedlich lange und/oder unterschiedlich steife Borsten aufweisende Borstenbüschel vorgesehen sind, wobei vorzugsweise jeder Borstenträger (10, 13) unterschiedlich geneigte Borstenbüschel aufweist und unterschiedlich geneigte Borstenbüschel unterschiedliche Querschnitte besitzen.

18. Zahnbürste mit einem Zahnbürstenkopf nach einem der vorhergehenden Ansprüche.

## Claims

1. A toothbrush head of an electric toothbrush that has a hand piece with a drive, having a brush head support (11) that can be connected to the hand piece, as well as a plurality of bristle carriers (10, 13), each of which supports a bristle field (9, 8), is movably mounted on the brush head support (11) and can be driven in an oscillating manner by the drive, wherein the bristle carriers (10, 13) can be coupled to a transformer (14) of the drive via a drive coupling (18, 50, 51; 21), **characterized in that** the bristle carriers (10, 13) each have drive coupling means (18, 51; 21), with which they can be connected to one or a plurality of eccentric carrier pieces (50) of the transformer (14) of the drive that can be rotationally driven about a longitudinal axis (60), wherein a main bristle carrier (10) is rotatably mounted and oscillatingly drivable on the end of the brush head support (11) distant from the hand piece around an axis of rotation (12) arranged essentially perpendicularly to the toothbrush longitudinal direction and/or essentially parallelly to a main bristle direction of the bristle field (9) arranged on the main bristle carrier and wherein a supplementary bristle carrier (13), a bristle carrier arranged closest to the hand piece, is pivotably mounted and oscillatingly drivable around a pivot axis (19, 25, 29) arranged essentially perpendicularly to the toothbrush longitudinal direction, wherein the pivot axis is arranged eccentrically with respect to the supplementary bristle carrier or the bristle field arranged thereon.

2. The toothbrush head according to the preceding claim, wherein the drive coupling means (18, 50, 51; 21) of the bristle carriers (10, 13) are designed in such a manner that they can be connected to a common carrier pin (51) that describes a cylindrical or conical circumferential path to the axis of rotation of the transformer.

3. The toothbrush head according to claim 1, wherein the drive coupling means (18, 50, 51; 21) of the bristle carrier (10, 13) are designed in such a manner that they can be connected to a common carrier pin (51) which can be oscillatingly driven on a segmented cylindrical or conical partly circumferential path to the axis of rotation of the transformer.

4. The toothbrush head according to any of the preceding claims, wherein the transformer (14) is mounted rotatably about its own longitudinal axis in the interior of the brush head support (11) on said brush head support and, on its end facing the hand piece, has a coupling section (1) for non-rotatable connection to a handpiece-side driving element.

5. The toothbrush head according to any of the preceding claims, wherein the bristle carriers (10, 13) each have a movement axis (12; 19, 25, 29, 30, 31) transverse to the toothbrush longitudinal direction.

6. The toothbrush head according to claim 1, wherein the pivot axis (19) of the supplementary bristle carrier (13) is arranged approximately parallelly to the main bristle direction of the supplementary bristle field (8) arranged on the supplementary bristle carrier (13) and/or approximately perpendicularly to the plane defined by the supplementary bristle carrier (13).

7. The toothbrush head according to claim 1, wherein the pivot axis (25, 29) of the supplementary bristle carrier (13) is arranged approximately parallelly to a plane defined by the supplementary bristle carrier (13).

8. The toothbrush head according to any of the preceding claims, wherein the supplementary bristle carrier (13) has a hinge joint as a drive coupling (21) that is formed in an articulated manner around a joint axis transverse to the toothbrush longitudinal direction.

9. The toothbrush head according to any of the preceding claims, wherein the drive coupling between the supplementary bristle carrier (13) and the carrier piece (50) of the transformer (14) has a translatory degree of freedom, in particular allows a translatory movability in a direction transverse to the axis of rotation of the transformer, wherein the carrier piece (50) preferably is guided in a recess (22) shaped like a long slot in the supplementary bristle carrier (13).

10. The toothbrush head according to any of the preceding claims, wherein the supplementary bristle carrier (13) has a sliding surface (27) as a drive coupling (21) that extends transversely to the longitudinal direction of the toothbrush and on which the carrier piece (50) can slide, wherein a preloading device is preferably provided that holds the sliding surface (27) in engagement with the carrier piece (50).

11. The toothbrush head according to any of the preceding claims, wherein the drive coupling means (21) of at least one of the bristle carriers () are designed in such a manner that only forces and movements transverse to the toothbrush longitudinal direction are transferred, wherein the drive couplings (18, 51; 21) are preferably designed to move freely in a plane comprising the longitudinal direction and to transfer forces in a plane perpendicular thereto.

12. The toothbrush head according to any of the preceding claims, wherein the drive coupling means (18, 51) of at least one of the bristle carriers (10) are designed in such a manner that forces and movements are transferred transversely to the toothbrush longitudinal direction and forces are transferred in the toothbrush longitudinal direction, wherein the corresponding carrier piece (50) is displaceably mounted on the transformer (14) in the toothbrush longitudinal direction and preferably elastically preloaded.

13. The toothbrush head according to any of the preceding claims, wherein the drive couplings (18; 23, 24) are provided directly and/or rigidly on the bristle carriers (10, 13) and are directly in positive engagement with the corresponding carrier piece (50) mounted on the transformer (14) without intermediate parts, such as connecting rods and the like.

14. The toothbrush head according to any of the preceding claims, wherein the transformer has an eccentric mounting hole, preferably designed as an injection-molded part, and the carrier (50) is formed from a pin, in particular a metal pin (50), that is held longitudinally displaceably in the mounting hole and rotatably about its longitudinal axis.

15. The toothbrush head according to any of the preceding claims, wherein preloading means (52), in particular a spring device (52), are provided for preloading the transformer or the carrier (50) mounted thereon against at least one of the bristle carriers (10).

16. The toothbrush head according to any of the preceding claims, wherein it has releasable securing means (61) for attachment onto the hand piece and the brush head carrier (11) together with the bristle carriers (10, 13) can be removed from or can be placed on the hand piece, wherein the transformer (14) has a releasable rotational coupling (1) that is threaded on or brought into engagement with a hand-piece-side drive element when the toothbrush head is placed onto the hand piece.

17. A toothbrush head according to any of the preceding claims, wherein on at least one of the bristle carriers (10, 13), bristle bundles are provided having bristles that are differently inclined, different in cross-section, different in length, and/or differently stiff, wherein each bristle carrier (10, 13) preferably has differently inclined bristle bundles and differently inclined bristle bundles have different cross-sections.

18. A toothbrush having a toothbrush head according to any of the preceding claims.

## Revendications

1. Tête d'une brosse à dents électrique, qui présente une pièce à main pourvue d'un dispositif d'entraînement, présentant un support (11) de tête de brosse qui peut être relié à la pièce à main ainsi que plusieurs supports (10, 13) de poils, portant respectivement une zone (9, 8) de poils et logés de manière mobile au niveau du support (11) de tête de brosse et pouvant être entraînés en oscillation par le dispositif d'entraînement, les supports (10, 13) de poils pouvant être accouplés au moyen d'un accouplement d'entraînement (18, 50, 51 ; 21) à un élément de transmission (14) du dispositif d'entraînement, **caractérisée en ce que** les supports (10, 13) de poils présentent respectivement des moyens (18, 51 ; 21) d'accouplement d'entraînement avec lesquels ils peuvent être accouplés à une ou plusieurs pièces (50) d'entraînement excentriques de l'élément de transmission (14) du dispositif d'entraînement pouvant être entraîné en rotation autour d'un axe longitudinal (60), un support (10) principal de poils étant logé, au niveau de l'extrémité éloignée de la pièce à main du support (11) de tête de brosse, de manière rotative et de manière à pouvoir être entraîné en oscillation autour d'un axe de rotation (12) agencé de manière essentiellement perpendiculaire à la direction longitudinale de la brosse à dents et/ou de manière essentiellement parallèle à une direction principale de poils de la zone (9) de poils disposée sur le support principal de poils et un support (13) de poils supplémentaire, un support de poils disposé plus près de la pièce à main, étant logé de manière pivotante et de manière à pouvoir être entraîné en oscillation autour d'un axe de pivotement (19, 25, 29) agencé de manière essentiellement perpendiculaire à la direction longitudinale de la brosse à dents, l'axe de pivotement étant disposé de manière excentrique par rapport au support de poils supplémentaire ou à la zone de poils disposée sur celui-ci.

2. Tête de brosse à dents selon la revendication précédente, les moyens (18, 50, 51 ; 21) d'accouplement d'entraînement du support (10, 13) de poils étant conçus de manière telle qu'ils peuvent être accouplés à une tige d'entraînement (51) commune, décrivant une orbite cylindrique ou conique par rapport à l'axe de rotation de l'élément de transmission.

3. Tête de brosse à dents selon la revendication 1, les moyens (18, 50, 51 ; 21) d'accouplement d'entraînement du support (10, 13) de poils étant conçus de manière telle qu'ils peuvent être accouplés à une tige d'entraînement (51) commune, qui peut être entraînée en oscillation sur une orbite partielle en forme de segment cylindrique ou conique par rapport à l'axe de rotation de l'élément de transmission.

4. Tête de brosse à dents selon une des revendications précédentes, l'élément de transmission (14) étant logé de manière rotative autour de son propre axe longitudinal à l'intérieur du support (11) de tête de brosse sur celui-ci et présentant au niveau de son extrémité orientée vers la pièce à main une section d'accouplement (1) pour l'accouplement fixe en rotation à un élément d'entraînement côté pièce à main.

5. Tête de brosse à dents selon une des revendications précédentes, les supports (10, 13) de poils présentant chacun un axe de mobilité (12 ; 19, 25, 29, 30, 31) transversal par rapport à la direction longitudinale de la brosse à dents.

6. Tête de brosse à dents selon la revendication 1, l'axe de pivotement (19) du support (13) de poils supplémentaire étant disposé environ parallèlement à la direction principale des poils de la zone (8) de poils supplémentaire agencée sur le support (13) de poils supplémentaire et/ou environ perpendiculairement par rapport au plan défini par le support (13) de poils supplémentaire.

7. Tête de brosse à dents selon la revendication 1, l'axe de pivotement (25, 29) du support (13) de poils supplémentaire étant disposé environ parallèlement à un plan défini par le support (13) de poils supplémentaire.

8. Tête de brosse à dents selon une des revendications précédentes, le support (13) de poils supplémentaire présentant, comme accouplement d'entraînement (21), une liaison articulée qui est conçue de manière articulée autour d'un axe d'articulation transversal par rapport à la direction longitudinale de la brosse à dents.

9. Tête de brosse à dents selon une des revendications précédentes, l'entraînement d'accouplement présentant, entre le support (13) de poils supplémentaire et la pièce d'entraînement (50) de l'élément de transmission (14), un degré de liberté de translation, en particulier une mobilité de translation dans une direction transversale par rapport à l'axe de rotation de l'élément de transmission, la pièce d'entraînement (50) étant de préférence guidée dans un évidement (22) en forme de fente longitudinale dans le support (13) de poils supplémentaire.

10. Tête de brosse à dents selon une des revendications précédentes, le support (13) de poils supplémentaire présentant, comme accouplement d'entraînement (21), une surface de glissement (27), qui s'étend transversalement par rapport à la direction longitudinale de la brosse à dents et sur laquelle peut glisser la pièce d'entraînement (50), un dispositif de précontrainte étant de préférence prévu, qui assure une mise en prise entre la surface de glissement (27) et la pièce d'entraînement (50).

11. Tête de brosse à dents selon une des revendications précédentes, les moyens (21) d'accouplement d'entraînement d'au moins un des supports () de poils étant conçus de manière telle que seules des forces et des mouvement transversaux par rapport à la direction longitudinale de la brosse à dents peuvent être transmis, les accouplements d'entraînement (18, 51 ; 21) étant de préférence conçus avec un mouvement libre dans un plan contenant la direction longitudinale et avec une transmission de force dans un plan perpendiculaire à celui-ci.

12. Tête de brosse à dents selon une des revendications précédentes, les moyens (18, 51) d'accouplement d'entraînement d'au moins un des supports (10) de poils étant conçus de manière telle que des forces et des mouvements transversaux par rapport à la direction longitudinale de la brosse à dents et des forces dans la direction longitudinale de la brosse à dents sont transmis, la pièce d'entraînement (50) correspondante étant logée de manière mobile dans la direction longitudinale de la brosse à dents, de préférence précontrainte de manière élastique, au niveau de l'élément de transmission (14).

13. Tête de brosse à dents selon une des revendications précédentes, les accouplements d'entraînement (18 ; 23, 24) étant disposés directement et/ou de manière rigide au niveau des supports (10, 13) de poils et en prise directe par complémentarité de forme, sans pièces interposées, comme des bielles et analogues, avec la pièce d'entraînement (50) respective fixée à l'élément de transmission (14).

14. Tête de brosse à dents selon une des revendications précédentes, l'élément de transmission présentant un alésage excentrique et étant de préférence conçu sous forme d'une pièce moulée par injection en matériau synthétique et la pièce d'entraînement (50) étant formée par une tige, de préférence une tige métallique (50), qui est reprise dans l'alésage de manière à pouvoir se déplacer longitudinalement et de manière à pouvoir tourner autour de son axe longitudinal.

15. Tête de brosse à dents selon une des revendications précédentes, des moyens de précontrainte (52), en particulier un dispositif à ressort (52), étant utilisés pour la précontrainte de l'élément de transmission ou de la pièce d'entraînement (50) fixée sur celui-ci contre au moins un des supports (10) de poils.

16. Tête de brosse à dents selon une des revendications précédentes, présentant des moyens de fixation (61) amovibles pour la fixation à la pièce à main et le support (11) de tête de brosse pouvant être enlevé de et placé sur la pièce à main, ensemble avec les supports (10, 13) de poils, l'élément de transmission (14) présentant un accouplement rotatif (1) amovible, qui s'enfile sur et entre en prise avec un élément d'entraînement côté pièce à main lors de l'enfichage de la tête de la brosse à dents sur la pièce à main.

17. Tête de brosse à dents selon une des revendications précédentes, des touffes de poils, présentant des poils inclinés différemment, de section transversale différente, de longueur différente et/ou de rigidité différentes étant disposées sur au moins un des supports (10, 13) de poils et chaque support (10, 13) de poils présentant de préférence des touffes de poils d'inclinaison différente et des touffes de poils d'inclinaison différente, présentant des sections transversales différentes.

18. Brosse à dents présentant une tête de brosse à dents selon une des revendications précédentes.
